Europäisches Patentamt

(19) European Patent Office

Office européen des brevets

(11) Numéro de publication : **0 354 103 B1**

(12)
# FASCICULE DE BREVET EUROPEEN

(45) Date de publication du fascicule du brevet :
**08.01.92 Bulletin 92/02**

(51) Int. Cl.⁵ : **B64D 33/02, F02C 7/042**

(21) Numéro de dépôt : **89402144.3**

(22) Date de dépôt : **28.07.89**

(54) **Entrée d'air supersonique bidimensionelle et asymétrique pour l'air de combustion d'un moteur d'aéronef.**

(30) Priorité : **04.08.88 FR 8810557**

(43) Date de publication de la demande :
**07.02.90 Bulletin 90/06**

(45) Mention de la délivrance du brevet :
**08.01.92 Bulletin 92/02**

(84) Etats contractants désignés :
**DE GB IT SE**

(56) Documents cités :
**FR-A- 1 234 483**
**GB-A- 899 625**
**US-A- 4 372 505**

(73) Titulaire : **OFFICE NATIONAL D'ETUDES ET DE RECHERCHES AEROSPATIALES (ONERA) 29, Av. de la Division Leclerc F-92320 Chatillon sous Bagneux (FR)**

(72) Inventeur : **Falempin, François**
**Résidence du Parc de Lormoy Bât. Flandre 2**
**F-91240 Saint Michel sur Orge (FR)**
Inventeur : **Sans, Claude**
**Chemin du Trou de l'Hôtel**
**F-91300 Massy (FR)**
Inventeur : **Champigny, Patrick**
**Bât. 5 bis 78, rue des Casseaux**
**F-91120 Villebon sur Yvette (FR)**
Inventeur : **Laruelle, Gérard**
**70 avenue Raymond Crosland**
**F-92350 Le Plessis Robinson (FR)**
Inventeur : **Garrel, Jean-Marie**
**10 Route des Petits Ponts**
**F-93290 Tremblay les Gonnesses (FR)**

(74) Mandataire : **Jacquelin, Marc-Henri et al**
**Cabinet PLASSERAUD 84, rue d'Amsterdam**
**F-75009 Paris (FR)**

## Description

L'invention est relative à une entrée d'air supersonique pour l'air de combustion d'un moteur d'aéronef, cette entrée d'air étant du type bidimensionnelle et asymétrique, c'est-à-dire que le caractère asymétrique de cette entrée d'air résulte du fait qu'elle comporte d'un côté un volet avant formant visière et de l'autre côté une carène.

Une entrée d'air doit pouvoir présenter de bonnes performances (en efficacité et en débit) dans un grand domaine de vol pour pouvoir être appliquée à de nombreux aéronefs : c'est ainsi que l'entrée d'air doit pouvoir présenter une section d'entrée qui peut augmenter dans des proportions importantes avec l'augmentation du nombre de Mach.

En effet, lorsque le nombre de Mach augmente, l'efficacité de l'entrée d'air (rapport entre la pression génératrice à l'entrée du moteur et la pression à l'infini amont) impose de dévier de plus en plus l'écoulement arrivant dans l'entrée d'air, pour le ralentir le plus possible par une succession d'ondes de choc obliques afin que le nombre de Mach en amont de l'onde de choc droite finale soit le plus faible possible, généralement autour d'une valeur de 1,4.

Par ailleurs, quel que soit le moteur aérobie utilisé, plus le nombre de Mach amont augmente, plus la section de l'écoulement capté doit être importante. En particulier, pour les aéronefs volant jusqu'à des nombres de Mach supérieurs à Mach 3, il est avantageux de disposer de sections d'entrée d'air plus grandes.

On a donc proposé des entrées d'air à géométrie variable.

L'art antérieur en matière d'entrée d'air à géométrie variable, qui concerne des aéronefs volant relativement lentement ($M \leq 2,5$), correspond aux réalisations mises en oeuvre sur l'avion CONCORDE (rampes de compression et de diffusion mobiles définissant entre elles un piège à couche limite interne), sur les avions AVIONS MARCEL DASSAULT/BREGUET AVIATION "MIRAGE" (corps mobile -- dit souris -- le long de la paroi de la carène), sur les avions Mc DONNELL DOUGLAS F15 (élément avant comportant un volet solidaire de parois latérales formant un ensemble basculant autour d'un axe voisin du bord d'attaque de la carène).

Le brevet France 1234483 décrit une entrée d'air qui est adaptée uniquement pour les grandes vitesses, notamment pour des vitesses supersoniques, et il a pour objet des dispositifs capables d'améliorer le fonctionnement de cette entrée d'air aux faibles vitesses, notamment pour des vitesses subsoniques. A cet effet, l'entrée d'air conforme à ce brevet comporte deux éléments distincts ayant chacun un axe de pivotement et qui sont reliés mécaniquement par un système à leviers.

Le but de la présente invention consiste en une entrée d'air à géométrie variable capable de présenter une section de captation qui peut augmenter fortement avec le nombre de Mach tout en répondant mieux que jusqu'à ce jour aux divers desiderata de la pratique que les entrées d'air selon l'art antérieur qui présentent, notamment, les inconvénients suivants :

— entrée d'air type CONCORDE : variation de section d'entrée peu importante limitée à l'effet favorable de l'incidence de vol,

— entrée d'air type AVIONS MARCEL DASSAULT/BREGUET AVIATION "MIRAGE" : variation de section d'entrée nulle,

— entrée d'air type Mc DONNEL DOUGLAS F15 : variation de la section relativement grande, mais chocs importants sur la paroi interne de la carène provenant des décollements de l'écoulement qui diminuent fortement l'efficacité de l'entrée d'air.

— entrée d'air type brevet France 1234483 : réduction importante du coefficient de débit aux vitesses subsoniques, ce qui conduit à une détérioration du bilan propulsif en raison de l'augmentation de la traînée provoquée par le volet.

L'entrée d'air supersonique bidimensionnelle pour l'air de combustion d'un moteur d'aéronef comporte :

— d'un côté, une carène,

— de l'autre côté, un volet avant formant visière et articulé autour d'un axe de pivotement situé à l'opposé de la carène,

— et un bec de carène mobile situé en avant de la carène et solidaire du susdit volet avant.

Selon l'invention, ce bec de carène mobile est agencé pour se déplacer en avant de la carène quand le volet avant se déplace dans le sens qui agrandit la section de l'entrée d'air.

Le déplacement en avant du bec de carène mobile permet de limiter la déviation de l'écoulement interne au niveau de la carène. De plus, la section minimale de l'entrée d'air est quasiment constante et la partie aval de l'entrée d'air qui forme diffuseur pour amener l'air de combustion au moteur peut présenter une géométrie fixe.

Dans ces conditions, pour un nombre de Mach amont et un angle d'incidence donné pour l'entrée d'air, il est possible de faire pivoter l'ensemble volet avant-bec de carène mobile pour obtenir un nombre de Mach à peu près constant au niveau du bec de carène, donc d'obtenir un nombre de Mach bien adapté à la géométrie correspondante de l'entrée d'air.

On assure donc une adaptation optimale de l'entrée d'air en fonction des évolutions conjointes du nombre de Mach supersonique et de l'incidence de l'entrée d'air au cours du vol.

Selon une première disposition avantageuse de l'invention, l'axe de pivotement du volet avant est situé au voisinage d'un piège à couche limite disposé dans la paroi de l'entrée d'air qui prolonge ledit volet avant.

En ce qui concerne le bec de carène mobile solidaire du volet avant, on peut avoir recours à l'un des deux modes de réalisation suivants et selon lesquels

— pour ce qui est du premier de ces modes de réalisation, le bec de carène mobile se déplace en avant de la carène dans le prolongement de celle-ci grâce à des surfaces en regard cylindriques centrées sur l'axe de pivotement du volet avant,

— et pour ce qui est du second de ces modes de réalisation, le bec de carène mobile se déplace en avant de la carène en délimitant avec celle-ci un passage de section variable formant piège à couche limite grâce à des surfaces en regard qui s'écartent l'une de l'autre lorsque le volet avant se déplace dans le sens qui agrandit la section de l'entrée d'air.

En variante du premier mode de réalisation, le déplacement des surfaces en regard cylindriques découvre des ouvertures ménagées dans leurs parois pour créer une loi particulière de variation de la section du piège à couche limite en fonction du déplacement du volet avant.

Constructivement, le bec de carène mobile est rendu solidaire du volet avant par l'intermédiaire de flancs latéraux, l'ensemble formant un caisson rigide pivotant. Cette solution constructive permet de résoudre les problèmes d'étanchéité, d'éliminer les vibrations mécaniques et de supprimer les mécanismes de liaison du genre à leviers.

L'invention consiste, mises à part les dispositions dont il vient d'être question, en certaines autres dispositions qui s'utilisent de préférence en même temps, et dont il sera plus explicitement question ci-après.

L'invention pourra de toute façon être bien comprise à l'aide du complément de description qui suit, ainsi que des dessins ci-annexés, lesquels complément et dessins sont relatifs à des modes de réalisation préférés de l'invention et ne comportent, bien entendu, aucun caractère limitatif.

Les figures 1 et 2 de ces dessins sont deux vues schématiques de face d'un aéronef équipé d'entrées d'air conformes à l'invention.

Les figures 3 et 4 montrent, dans deux positions différentes, une entrée d'air établie conformément à un premier mode de réalisation de l'invention.

Les figures 5 et 6 montrent, dans deux positions différentes, une entrée d'air établie conformément à un second mode de réalisation de l'invention.

La figure 7 montre une variante du premier mode de réalisation illustré sur les figures 3 et 4.

La figure 8 est une vue schématique en perspective d'une disposition constructive avantageuse de l'invention.

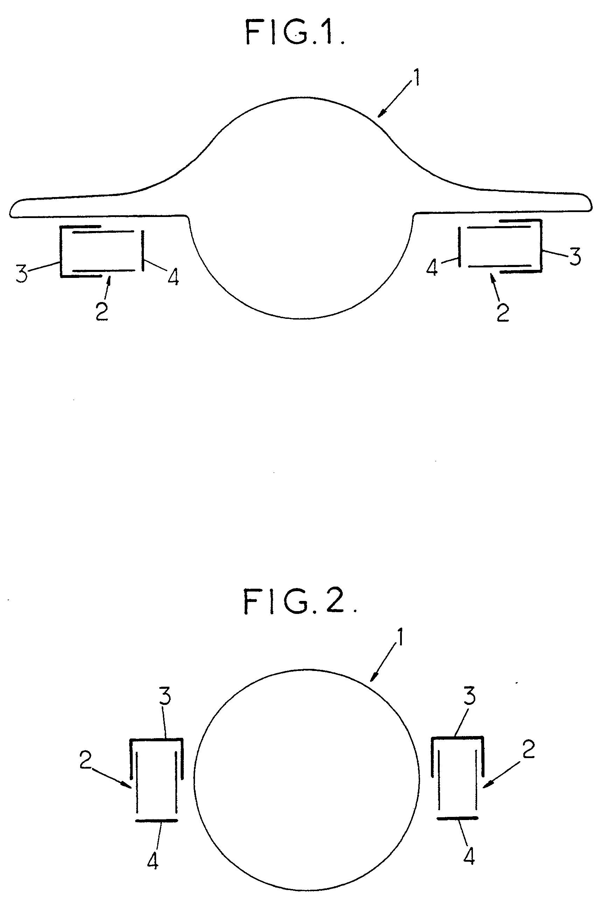

Sur les figures 1 et 2, on a schématisé en 1 la silhouette d'un aéronef vu de face et comportant deux entrées d'air 2 situées sous la voilure (figure 1) ou latéralement de chaque côté du fuselage (figure 2).

Chaque entrée d'air 2 alimente en air de combustion un moteur (non représenté) de l'aéronef 1.

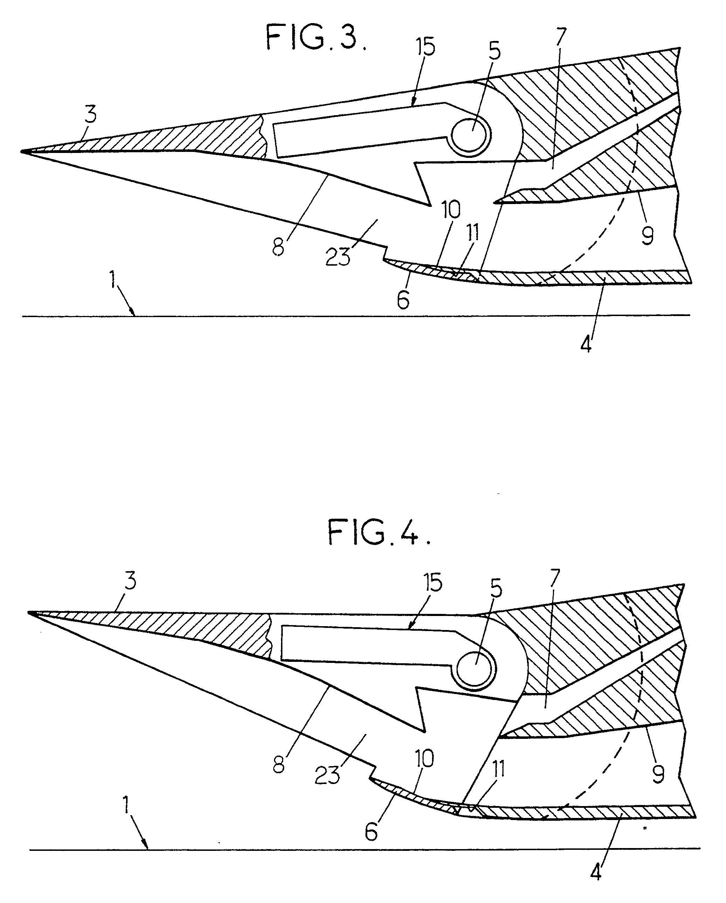

Comme montré sur les figures 3 à 7, qui sont des coupes longitudinales d'une entrée d'air conforme à l'invention, l'entrée d'air, de type bidimensionnel et asymétrique, comporte, d'un côté un volet avant 3 formant visière, et de l'autre côté une carène 4.

Le volet avant 3 est mobile autour d'un axe de pivotement 5 situé à l'opposé de la carène 4.

Le volet avant 3 est solidaire d'un bec de carène mobile 6 situé en avant de la carène 4 et se déplaçant en avant de celle-ci quand le volet avant 3 se déplace dans le sens qui agrandit la section de captation d'air.

Dans ces figures, le volet avant 3 est rendu solidaire du bec de carène 6 par l'intermédiaire de flancs latéraux 23, l'ensemble formant un caisson rigide pivotant.

Il est avantageux de prévoir, comme montré sur les figures 3 à 7, une disposition de l'axe de pivotement 5 du volet avant 3 telle que ledit axe de pivotement 5 est situé au voisinage (de préférence en avant) d'un piège à couche limite 7 disposé dans la paroi de l'entrée d'air qui prolonge le volet avant 3.

L'air capté par le volet avant 3 rencontre donc

— la rampe de compression 8 constituée par la paroi interne du volet avant 3,

— le piège à couche limite 7,

— le diffuseur 9 constitué par la paroi interne de l'entrée d'air qui prolonge la rampe de compression 8.

Selon le mode de réalisation illustré sur les figures 3, 4 et 7, le bec de carène mobile 6 se déplace en avant de la carène 4 dans le prolongement de celle-ci grâce à des surfaces en regard 10 et 11 cylindriques centrées sur l'axe de pivotement 5 du volet avant 3.

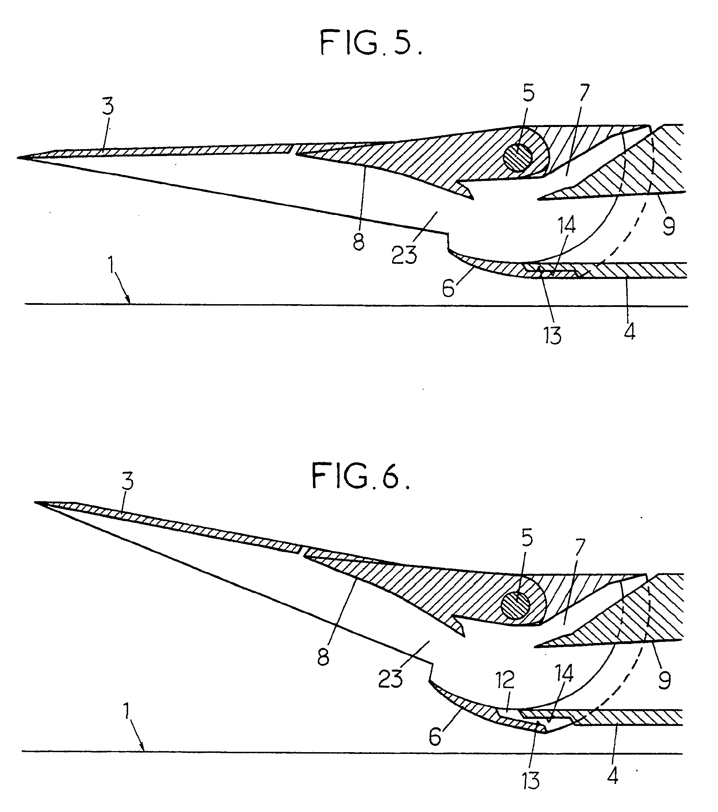

Selon le mode de réalisation illustré sur les figures 5 et 6, le bec de carène mobile 6 se déplace en avant de la carène 4 en délimitant avec celle-ci un passage de section variable 12 formant piège à couche limite grâce à des surfaces en regard 13 et 14 qui s'écartent l'une de l'autre lorsque le volet avant 3 se déplace dans le sens qui agrandit la section de l'entrée d'air.

Le fonctionnement d'une entrée d'air établie conformément à l'invention est alors le suivant :

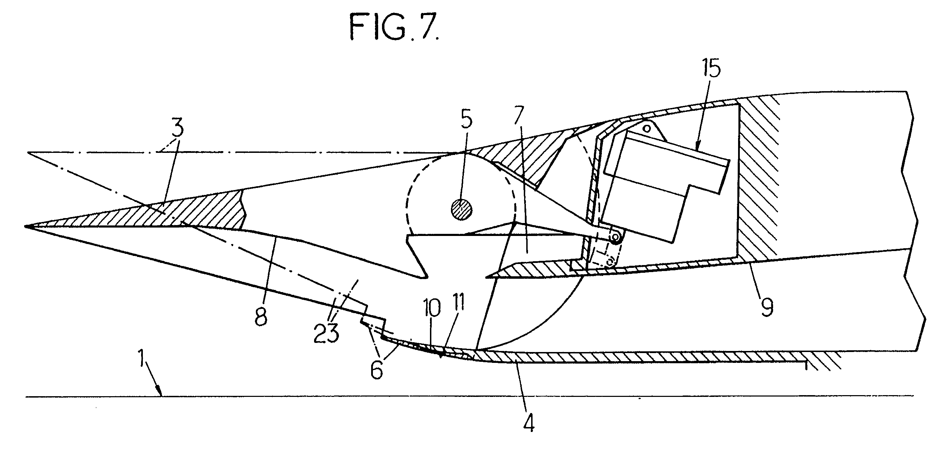

— à nombre de Mach faible (par exemple inférieur à 2,5), le volet avant 3 et le bec de carène mobile 6 sont dans la position montrée sur les figures 3 et 5 et sur le tracé en trait plein sur la figure 7. Sur la figure 5, le passage 12 présente une section nulle ;

— à nombre de Mach élevé (par exemple supérieur à 3), le volet avant 3 et le bec de carène mobile 6 sont dans la position montrée sur les figures 4 et 6 et sur le tracé en trait mixte sur la figure 7. Sur la figure 6, le passage 12 présente une section maximale et forme donc piège à couche limite.

En ce qui concerne les moyens moteurs à mettre en oeuvre pour l'actionnement de l'ensemble volet avant 3-bec de carène mobile 6, ils sont désignés, d'une façon générale, par le chiffre de référence 15 sur les figures 3, 4 et 7.

Compte tenu des conditions d'utilisation sévères, il y a lieu de prévoir des moyens moteurs 15 du type irréversible, c'est-à-dire qu'en l'absence de source d'énergie, l'ensemble volet avant 3-bec de carène mobile 6 est immobilisé dans la position atteinte lors de la coupure de l'alimentation en énergie.

Par ailleurs, ces moyens moteurs 15 doivent présenter un encombrement minimal, pour, de préférence, être logés dans le volet avant 3 (figures 3 et 4) ou dans un logement situé en arrière du piège à couche limite 7 (figure 7).

Enfin, ces moyens moteurs 15 doivent avoir un temps de réponse le plus faible possible pour pouvoir provoquer des manoeuvres rapides de l'ensemble volet avant 3-bec de carène mobile 6.

Sur les figures 3, 4 et 7, ces moyens moteurs 15 ont été schématisés.

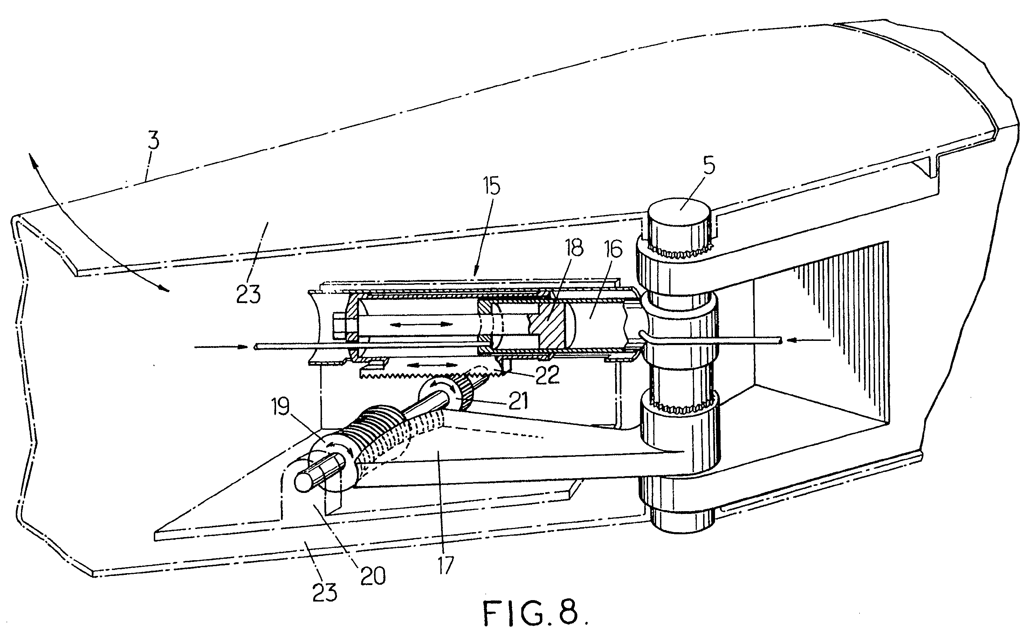

Sur la figure 8, ces moyens moteurs 15 ont été détaillés et sont essentiellement constitués par
— un corps de vérin 16 monté pivotant autour de l'axe de pivotement 5 du volet avant 3,
— un secteur denté 17 solidaire de l'axe de pivotement 5 du volet avant 3,
— un piston de vérin 18 coulissant dans ledit corps de vérin 16 sous l'action d'une pression pneumatique,
— une vis globique 19 en prise avec le secteur denté 17, fixée sur un axe tournant dans des paliers 20 solidaires du volet avant 3,
— une liaison par pignon 21 et crémaillère 22 entre cette vis globique 19 et le piston de vérin 18.

L'air sous pression, commandé par des électrovannes (non représentées), arrive dans le corps de vérin 16, et le piston de vérin 18 entraîne dans un sens ou dans l'autre la crémaillère 22 qui entraîne en rotation le pignon 21 et la vis globique 19, dont la position axiale est bloquée. La vis globique 19 en prise avec le secteur denté 17 fixe, entraîne le pivotement du volet avant 3 et du bec de carène mobile 6 autour de l'axe de pivotement 5.

De tels moyens moteurs 15 sont
— simples à réaliser,
— de type irréversible, grâce à la réaction vis globique-secteur denté,
— peu encombrants,
— susceptibles d'être réalisés en matériaux capables de supporter une température de fonctionnement élevée.

## Revendications

1. Entrée d'air supersonique bidimensionnelle pour l'air de combustion d'un moteur d'aéronef comportant :
   — d'un côté, une carène (4),
   — de l'autre côté, un volet avant (3) formant visière et articulé autour d'un axe de pivotement (5) situé à l'opposé de la carène (4)
   — un bec de carène mobile (6) situé en avant de la carène (4) et solidaire du susdit volet avant (3), caractérisée par le fait que ce bec de carène mobile (6) est agencé pour se déplacer en avant de la carène (4) quand le volet avant (3) se déplace dans le sens qui agrandit la section de l'entrée d'air.

2. Entrée d'air selon la revendication 1, caractérisée par le fait que l'axe de pivotement (5) du volet avant (3) est disposé au voisinage d'un piège à couche limite (7) disposé dans la paroi de l'entrée d'air qui prolonge ledit volet avant (3).

3. Entrée d'air selon la revendication 1 ou 2, caractérisée par le fait que le bec de carène mobile (6) se déplace en avant de la carène (4) dans le prolongement de celle-ci grâce à des surfaces en regard cylindriques (10, 11) centrées sur l'axe de pivotement (5) du volet avant (3).

4. Entrée d'air selon la revendication 1 ou 2, caractérisée par le fait que le bec de carène mobile (6) se déplace en avant de la carène (4) en délimitant avec celle-ci un passage (12) de section variable formant piège à couche limite grâce à des surfaces en regard (13, 14) qui s'écartent l'une de l'autre lorsque le volet avant (3) se déplace dans le sens qui agrandit la section de l'entrée d'air.

5. Entrée d'air selon la revendication 3, caractérisée par le fait que les parois cylindriques (10, 11) sont munies d'ouvertures formant piège à couche limite, la conformation des ouvertures étant déterminée pour obtenir une loi particulière de variation de la section du piège à couche limite en fonction du déplacement du volet avant (3).

6. Entrée d'air selon l'une des revendications 1 à 5, caractérisée par le fait que le bec de carène mobile (6) est rendu solidaire du volet avant (3) par l'intermédiaire de flancs latéraux (23), l'ensemble formant un caisson rigide pivotant.

7. Entrée d'air selon l'une quelconque des revendications 1 à 6, caractérisée par le fait que l'ensemble volet avant (3)-bec de carène mobile (6) est actionné par des moyens moteurs (15) du type irréversible.

## Patentansprüche

1. Zweidimensionaler Ultraschallufteintritt für Verbrennungsluft eines Luftfahrzeugmotors mit
   — einem Triebwerksgehäuse (4) auf der einen Seite

— einem eine Blende bildenen Vorflügel (3), der um eine vom Triebwerksgehäuse (4) abgewandt angeordnete Schwenkachse (5) bewegbar ist, auf der anderen Seite, und

— einer bewegbaren Triebwerksgehäusenase (6), die dem Triebwerksgehäuse (4) vorgelagert angeordnet und mit dem Vorflügel (3) fest verbunden ist, **dadurch gekennzeichnet,** daß die bewegbare Triebwerksgehäusenase (6) derart angeordnet ist, daß sie sich im Triebwerksgehäuse (4) nach vorne bewegt, wenn sich der Vorflügel (3) in der Richtung bewegt, in der sich der Querschnitt des Lufteintritts vergrößert.

2. Lufteintritt nach Anspruch 1, **dadurch gekennzeichnet,** daß die Schwenkachse (5) des Vorflügels (3) in der Nähe einer Grenzschichtfalle (7), die in der den Vorflügel (3) verlängernden Wand des Lufteintritts angelegt ist, angeordnet ist.

3. Lufteintritt nach Anspruch 1 oder 2, **dadurch gekennzeichnet,** daß sich die bewegbare Triebwerksgehäusenase (6) dank einander gegenüberliegender zylindrischer Oberflächen (10, 11), die auf die Schwenkachse (5) des Vorflügels (3) zentriert sind, im Triebwerksgehäuse (4) in Verlängerung desselben nach vorne bewegt.

4. Lufteintritt nach Anspruch 1 oder 2, **dadurch gekennzeichnet,** daß sich die bewegbare Triebwerksgehäusenase (6) im Triebwerksgehäuse (4) nach vorne bewegt und dabei mit diesem einen Durchlaß (12) veränderbaren Querschnitts begrenzt, der dank einander zugewandter Oberflächen (13, 14), die sich voneinander wegbewegen, wenn sich der Vorflügel (3) in der Richtung bewegt, die den Querschnitt des Lufteintritts vergrößert, eine Grenzschichtfalle bildet.

5. Lufteintritt nach Anspruch 3, **dadurch gekennzeichnet,** daß die zylindrischen Wände (10, 11) mit eine Grenzschichtfalle bildenden Öffnungen versehen sind, wobei die Gestaltung der Öffnungen so bestimmt ist, daß eine bestimmte Gesetzmäßigkeit für die Veränderung des Querschnittes der Grenzschichtfalle in Abhängigkeit von der Bewegung des Vorflügels (3) erhalten wird.

6. Lufteintritt nach einem der Ansprüche 1 bis 5, **dadurch gekennzeichnet,** daß die bewegbare Triebwerksgehäusenase (6) mittels seitlicher Flanken (23) mit dem Vorflügel (3) fest verbunden ist, wobei die Gesamtheit einen festen, schwenkbaren Kasten bildet.

7. Lufteintritt nach einem der Ansprüche 1 bis 6, **dadurch gekennzeichnet,** daß die Gesamtheit aus Vorflügel (3) und bewegbarer Triebwerksgehäusenase (6) mittels nicht umkehrbarer Antriebsmittel (15) betätigbar ist.

**Claims**

1. Two dimensional supersonic air intake for the combustion air of an aircraft engine comprising :

— on one side a fairing (4)

— on the other side, a front flap (3) forming a visor and articulated about a pivoting axis (5) situated opposite the fairing (4),

— a mobile fairing nose (6) situated in front of the fairing (4) and fast with said front flap (3), characterized by the fact that this mobile fairing nose (6) is adapted for moving in front of the fairing (4) when the front flap (3) moves in the direction which increases the air intake section.

2. Air intake according to claim 1, characterized by the fact that the pivoting axis (5) of the front flap (3) is disposed in the vicinity of a boundary layer trap (7) disposed in the wall of the air intake which extends said front flap (3).

3. Air intake according to claim 1 or 2, characterized by the fact that the mobile fairing nose (6) moves in front of the fairing (4) in the extension thereof through facing cylindrical surfaces (10, 11) centred on the pivoting axis (5) of the front flap (3).

4. Air intake according to claim 1 or 2, characterized by the fact that the mobile fairing nose (6) moves in front of the fairing (4) while defining therewith a variable section passage (12) forming a boundary layer trap through facing surfaces (13, 14) which move away from each other when the front flap (3) moves in the direction which increases the air intake section.

5. Air intake according to claim 3, characterized by the fact that the cylindrical walls (11, 11) are provided with openings forming a boundary layer trap, the formation of the openings being defined so as to obtain a particular law of variation of the section of the boundary layer trap as a function of the movement of the front flap (3).

6. Air intake according to any of claims 1 to 5, characterized by the fact that the mobile fairing nose (6) is made fast with the front flap (3) by lateral sides (23), the assembly forming a rigid pivoting case.

7. Air intake according to any of claim 1 to 6, characterized by the fact that the front flap (3) — mobile fairing nose (6) assembly is actuated by drive means (15) of irreversible type.

# FIG.1.

# FIG.2.

# FIG.3.

# FIG.4.

# FIG. 5.

# FIG. 6.

# FIG.7.

EP 0 354 103 B1

FIG.8.

EP 0 354 103 B1